**Europäisches Patentamt**

**European Patent Office**

**Office européen des brevets**

(11) Veröffentlichungsnummer: **0 173 982**
**B1**

(12) # EUROPÄISCHE PATENTSCHRIFT

(45) Veröffentlichungstag der Patentschrift:
**26.10.88**

(21) Anmeldenummer: **85110975.1**

(22) Anmeldetag: **30.08.85**

(51) Int. Cl.⁴: **A 23 P 1/12**

(54) **Kochextruder.**

(30) Priorität: **07.09.84 DE 3433013**

(43) Veröffentlichungstag der Anmeldung:
**12.03.86 Patentblatt 86/11**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**EP - A - 0 071 183**
**FR - A - 2 191 848**
**FR - A - 2 225 274**
**FR - A - 2 505 614**
**US - A - 2 816 837**
**US - A - 3 480 445**
**US - A - 4 259 051**

(73) Patentinhaber: **Convent Knabber-Gebäck GmbH & Co.**
**KG, Linnichhaus Linnicher Strasse 48,**
**D-5000 Köln 41 (DE)**
Patentinhaber: **Schaaf, Heinz, Quellenweg 14 + 19a,**
**D-6277 Bad Camberg-Oberselters (DE)**

(72) Erfinder: **Schaaf, Heinz, Quellenweg 14 + 19a,**
**D-6277 Bad Camberg-Oberselters (DE)**
Erfinder: **Walter, Horst, Zedernstrasse 21,**
**D-4048 Grevenbroich (DE)**

(74) Vertreter: **Patentanwälte Müller-Boré, Deufel, Schön,**
**Hertel, Lewald, Otto, Isartorplatz 6,**
**D-8000 München 2 (DE)**

ACTORUM AG

## Beschreibung

Die Erfindung betrifft einen Kochextruder mit einer Extruderschnecke zur Zuführung des Materials für einen Hüllkörper und mit einem Düsenkopf, wobei durch den Düsenkopf ein Füllrohr zur Zuführung des Materials eines Füllkörpers geführt ist und das Füllrohr von einem Ringraum umgeben ist, der ggf. an eine Unterdruckquelle anschliessbar ist, wobei das Material des Hüllkörpers unter einem Winkel zur Achse des Füllrohres zugeführt wird, wobei das Füllrohr innerhalb eines Hohldornes oder Führungsrohres angeordnet ist und der Hohldorn oder das Führungsrohr die Innenseite der Düse für das Material des Hüllkörpers bildet.

Mit einem derartigen Düsenkopf für einen Kochextruder wird kontinuierlich ein Hüllkörper ausgebildet, der in einem Arbeitsgang vollständig mit einer essbaren Masse gefüllt werden kann. Die Füllmasse wird dabei durch das Füllrohr gepresst, und das durch die Extruderschnecke zugeführte Hüllmaterial wird um einen Hohldorn herum ausgestossen, der aus thermischen Gründen mit dem Füllrohr einen isolierenden Ringraum einschliesst. Bei einem derartig ausgebildeten Düsenkopf kann es leicht zu einer Verstopfung des Füllrohres kommen, was zu einer Unterbrechung der Produktion führt, bis das Füllrohr gereinigt ist. Ferner ist es möglich, dass das um den Hohldorn geführte Hüllmaterial infolge ungleichmässiger Druckverteilung im Düsenkopf und Temperaturunterschieden in der Masse Fehlstellen in dem Hüllkörper ausbildet.

Aus der FR-A 2 505 614 ist ein Kochextruder mit einem Düsenkopf bekannt, bei welchem ein Füllrohr und eine Düse für einen Hüllkörper vorgesehen sind. Das Füllrohr bildet dort gleichzeitig die Innenseite der Düse für das Hüllmaterial. Zusätzlich sind dort im Bereich der Düse für das Hüllmaterial Düsen angeordnet, mit welchen eine Strukturierung des Hüllkörpers erfolgen kann. Der bekannte Düsenkopf ist bei Unterbrechung der Produktion auseinandernehmbar, so dass verschiedene Düseneinsätze angeordnet werden können.

Gattungsgemässe Extruder sind aus der US-A 2 816 837 sowie der US-A 4 259 051 bekannt. Dort ist aber nichts darüber ausgesagt, wie Störungen bei der Zuführung der Füllmasse schnell ohne Produktionsunterbrechung behoben werden können.

Der Erfindung liegt die Aufgabe zugrunde, einen gattungsgemässen Kochextruder z.B. gemäss EP-A 71 183 derart auszubilden, dass Störungen bei der Zuführung des Füllmaterials schnell behoben werden können.

Die Lösung dieser Aufgabe wird erfindungsgemäss dadurch erreicht, dass das Füllrohr ohne Demontage des Düsenkopfes lösbar innerhalb des Ringraumes angeordnet und nach hinten aus dem Düsenkopf herausziehbar ist.

Bei einer eventuellen Verstopfung des Füllrohres ist es nicht erforderlich, den Kochextruder abzuschalten, bis das Füllrohr gereinigt ist, sondern nach Herausziehen des verstopften Füllrohres kann ein gereinigtes Füllrohr, das an die Zuführungsleitung für die Füllmasse angeschlossen ist, eingesetzt werden. Dabei ist es, wie an sich bekannt, möglich, den vor den Düsenkopf herausragenden Bereich des Füllrohres in der Länge einzustellen, so dass eine schnelle Anpassung an unterschiedliche Eigenschaften des Materials der Hüllmasse sowie der Füllmasse möglich ist.

Um das Füllrohr an einem ungewollten Herausrutschen aus dem Düsenkopf nach vorn zu hindern, wird es vorzugsweise an dem Bereich, der hinter dem Düsenkopf herausragt, mit einer Klemme oder einem anklemmbaren Ring versehen, welcher als Widerlager dient und sich gegen die Rückseite des Düsenkopfes abstützt.

Gemäss einer bevorzugten Ausführungsform ist die Achse des Düsenkopfes parallel-versetzt zu der Achse der Extruderschnecke angeordnet, so dass das Füllrohr nach hinten aus dem Düsenkopf herausziehbar ist.

Am Ausgangsende des Extruders ist vorzugsweise eine rechtwinklig angeordnete Düsenplatte angeordnet, die mit einem Innenkanal zur Führung des Materials des Hüllkörpers ausgebildet ist.

Gemäss einer bevorzugten Ausführungsform sind vor dem Düsenkopf Formwalzen angeordnet, und durch die Formwalzen ist das Füllrohr hindurchgeführt. Das Füllrohr bildet vorzugsweise ein Widerlager für die Formwalzen, so dass der zur Ausbildung eines Musters auf der Aussenseite des Hüllkörpers erforderliche Druck ohne ungewünschte Verformung des Hüllkörpers aufgebracht werden kann.

Um eine lokale Wärmebehandlung der Aussenseite des Hüllkörpers zu ermöglichen, sind die Formwalzen vorzugsweise aufheizbar. Die Formwalzen können insbesondere mit einem Muster oder einem Zeichen versehen sein und werden bis auf Rotglut aufgeheizt, so dass der Hüllkörper mit einer Art Brandzeichen ausgebildet werden kann.

Um eine gleichmässige Beschaffenheit des Hüllkörpers zu erreichen, sind in Weiterbildung der Erfindung um den Düsenkopf Heizelemente angeordnet. Diese Heizelemente, die vorzugsweise in Form von Heizpatronen ausgebildet sind, sind insbesondere an der Extruder-abgewandten Seite des Düsenkopfes angeordnet, da dort die Masse des Hüllkörpers stärker abgekühlt ist als an der extrudernahen Seite. Durch die Aufheizung wird erreicht, dass die Masse um den gesamten Hohldorn herum während ihres Austritts aus dem Düsenkopf die gleiche Konsistenz aufweist.

Ferner kann das Füllrohr als Mehrfachfüllrohr ausgebildet sein, so dass innerhalb eines rechtwinkligen, kreisförmigen, ovalen oder in zusammengesetzter Form ausgebildeten Hüllkörpers verschiedene Massen gleichzeitig extrudiert werden können.

Gemäss einer bevorzugten weiteren Ausführungsform ist das Füllrohr an eine Druckgasquelle anschliessbar, wobei es sich bei dem Druckgas vorzugsweise um Druckluft handelt, so dass beim Extrudieren des Hüllkörpers dieser Hüllkörper aufgeblasen werden kann, um die durch das Material des Hüllkörpers und die Düsenform kleinstmögliche Wandstärke des Hüllkörpers weiterhin zu verringern.

Wenn beim Einblasen, beispielsweise von Druckluft, ein Feststoff in Pulverform oder eine Flüssigkeit miteingespritzt wird und am vorderen Ende des Füllrohrs ein Leitdorn angeordnet ist, kann die Innenwandung des aufgeblasenen Hüllkörpers ausgespritzt werden.

Eine gleichmässige Ausbildung des Hüllkörpers wird ebenfalls vorzugsweise erreicht, indem im Düsenkopf eine Stauplatte um das Führungsrohr für das Füllrohr angeordnet wird. Diese Stauplatte ist mit einer Lochung zur gleichmässigen Verteilung des Materialstromes vor dem Austritt aus dem Düsenkopf versehen, wobei insbesondere an der Extruder-abgewandten Seite der Stauplatte mehr Durchgangslöcher angeordnet sind als an der extrudernahen Seite. Damit wird mehr Material um das Führungsrohr herumgeführt, da der Widerstand im extrudernahen Bereich der Stauplatte grösser wird.

Eine Einstellung des Druckes in dem Material für den Hüllkörper und damit eine Verbesserung des extrudierten Hüllkörpers kann vorzugsweise auch erreicht werden, indem zur Einstellung des Druckes in dem Hüllmaterial eine Einstellschraube vor dem Extruderende angeordnet ist. Diese Schraube ist vorzugsweise in Form einer Düsennadel mit konischer Spitze ausgebildet.

Die Düsenplatte kann beispielsweise aus drei zusammengeschraubten Platten ausgebildet sein, wobei die mittlere Platte ein Langloch zur Führung des Hüllmaterials aufweist. Gemäss einer bevorzugten Ausführungsform ist die Düsenplatte zweiteilig ausgebildet, wobei in jeder Platte Nuten ausgearbeitet sind, die zusammengesetzt den Kanal für das Hüllmaterial bilden.

Zur Ausbildung von einem extrudierten Nahrungsmittel mit geöffnetem Hüllkörper und eventuell mehreren eingefüllten Füllmaterialien kann zwischen Ringdüse und Füllrohr ein Trennelement und vor dem Düsenkopf ein weiteres Füllrohr angeordnet sein, wobei das Füllrohr gleichzeitig zum Auseinandertrennen der durch das Trennelement ausgebildeten Sollbruchstelle in dem Hüllkörper dient.

Ausführungsbeispiele der Erfindung werden anhand der Zeichnung erläutert. Es zeigen:

Fig. 1 einen Längsschnitt durch einen Düsenkopf, gemäss der Linie I–I von Fig. 2,

Fig. 2 einen Horizontalschnitt durch eine Düsenplatte mit Düsenkopf,

Fig. 3 eine Draufsicht auf eine Düsenplatte gemäss Pfeil III von Fig. 2,

Fig. 4 eine Draufsicht auf eine Stauplatte,

Fig. 5 einen Schnitt durch die Stauplatte gemäss der Linie V–V von Fig. 4,

Fig. 6 ein Draufsicht auf die Düse für die Hüllkörper und

Fig. 7 einen Schnitt durch die Düse gemäss der Linie VII–VII von Fig. 6.

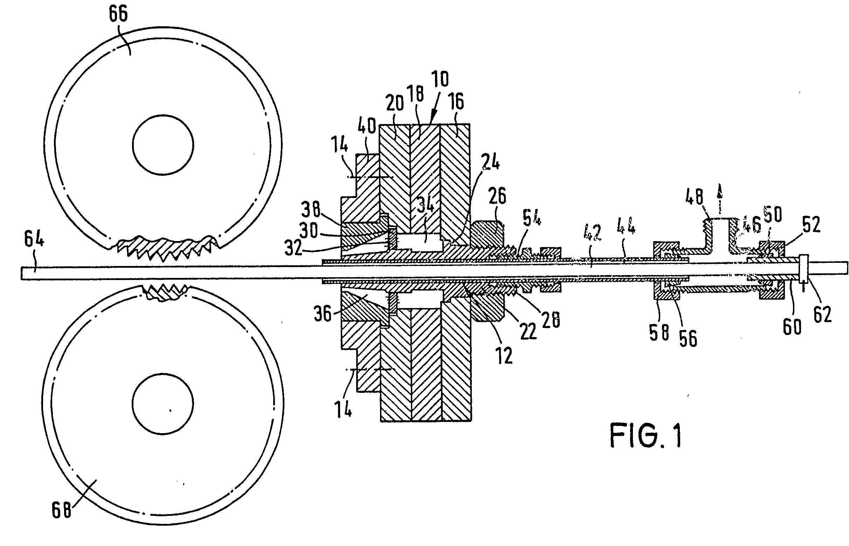

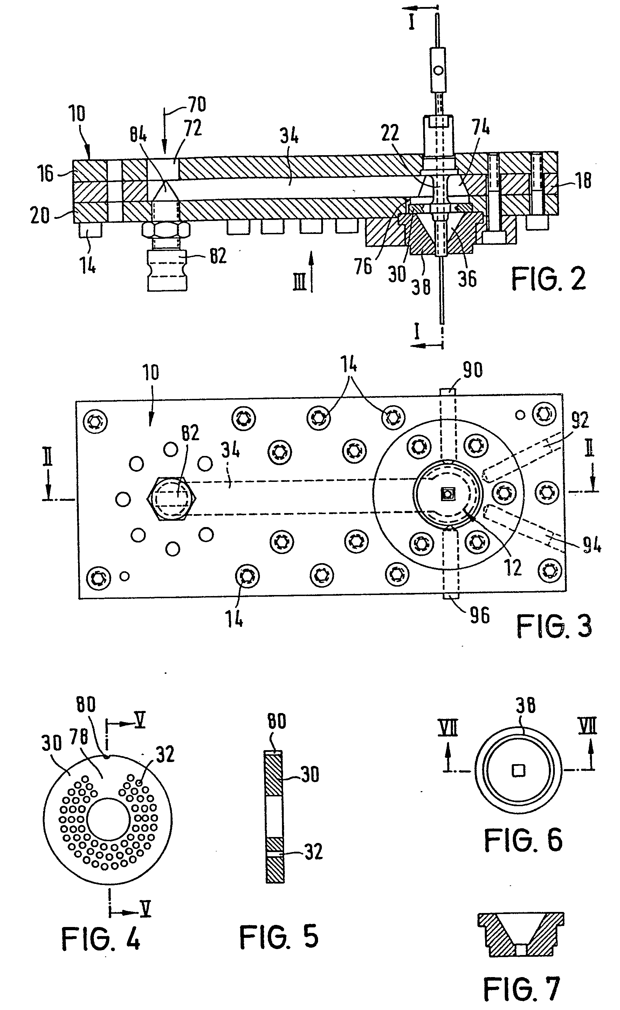

Die in Fig. 1 gezeigte Anordnung zur Herstellung eines Nahrungsmittels, bestehend aus einem Hüllkörper und gegebenenfalls einer in diesem Hüllkörper angeordneten Füllung, besteht aus einer Düsenplatte 10, in welcher in einem Bereich ein Düsenkopf 12 angeordnet ist. Die Düsenplatte 10 ist bei der gezeigten Ausführungsform aus drei über Schrauben 14 zusammengespannte Platten aufgebaut, wobei in einer hinteren Platte 16 lediglich Durchgangsbohrungen für den Düsenkopf 12 und für die Einleitung des Materialstromes für den Hüllkörper ausgebildet sind, eine mittlere Platte 18 ein Langloch aufweist, welches zur Führung des Materials für den Hüllkörper von dem Extruderende bis zu dem Düsenkopf dient, und eine vordere Platte 20, in welcher eine Durchgangsbohrung für den Düsenkopf und eine Durchgangsbohrung für eine Einstellschraube angeordnet ist, die anhand von Fig. 2 und 3 näher erläutert wird.

Der Düsenkopf 12 besteht aus einem Hohldorn oder Führungsrohr 22, welcher sich über eine angeformte Schulter 24 an der hinteren Platte 16 abstützt und über eine Mutter 26 an dieser Platte 16 festgelegt ist. In dem Hohldorn 22 ist eine rohrförmige Auskleidung 28 angeordnet, welche nach hinten über den Hohldorn 22 hinaus verlängert ist. In der vorderen Platte 20 ist eine Stauplatte 30 angeordnet, welche mit Durchgangsöffnungen 32 ausgebildet ist, durch welche das durch den Kanal 34 geführte Material für den Hüllkörper gepresst wird. Dieses Material wird dann durch den Ringraum 36 geführt, der durch die Aussenseite des Hohldorns 22 und die Innenseite eines Düseneinsatzes 38 gebildet wird. Der Düseneinsatz 38, der über eine Klemmplatte 40 an der Düsenplatte 10 befestigt ist, weist in der gezeigten Ausführungsform eine quadratische Öffnung auf. Das vordere Ende des Hohldornes 22 kann ebenfalls eine quadratische Aussenkontur aufweisen, so dass ein Hüllkörper in Form eines Vierkantrohres ausgebildet wird.

Innerhalb des Hohldornes oder Führungsrohres 22 ist ein Füllrohr 42 vorgesehen, wobei zwischen der Innenseite der Auskleidung 28 und der Aussenseite des Füllrohres 42 ein Ringraum 44 ausgebildet ist, welcher von einem T-förmigen Element 46 abgeschlossen ist. Dieses Element 46 ist über einen Stutzen 48 an eine Unterdruckquelle anschliessbar, so dass der in dem rohrförmigen Hüllkörper während des Extrudierens gebildete Dampf abgesaugt werden kann. Dadurch wird ein Aufweichen des rohrförmigen porösen Hüllkörpers vermieden.

Das Füllrohr 42 ist durch das Element 46 hindurchgeführt, wobei über einen konischen Ring 50 und eine Mutter 52 eine Abdichtung des Elementes 46 an dem Füllrohr 42 erfolgt. Das Rohr 28 ist an dem Hohldorn 22 über eine mit einem Aussengewinde versehene Muffe 54 festgelegt. Das Element 46 ist an dem Rohr 28 über einen konischen Dichtring 56 und eine Mutter 58 befestigt. Der konische Dichtring 50 liegt auf der Aussenseite eines Rohrabschnittes 60 auf, durch welchen das Füllrohr 42 verschoben bzw. nach hinten aus dem Düsenkopf herausgezogen werden kann. Um ein Herausziehen aus dem Düsenkopf nach vorn zu verhindern, ist hinter dem Element 46 an dem Füllrohr 42 eine Klemme 62 vorgesehen, welche sich an dem Element bei gleichzeitigem Festhalten des Füllrohrs 42 abstützt.

Der vor den Düsenkopf ragende Bereich 64 des Füllrohres 42 ist zwischen zwei Formwalzen 66 und 68 hindurchgeführt. Die Formwalzen 66 und 68, die zur Ausbildung eines geeigneten Musters an der Aussenseite des Hüllkörpers vorgesehen sind, können auch beispielsweise bis auf Rotglut aufheizbar sein, so dass an der Aussenseite des Hüllkörpers eine lokale Wärmebehandlung erfolgen kann. Beispielsweise kann mit derartigen Formwalzen ein Warenzeichen in Form eines Brandzeichens aufgebracht werden. Während des Betriebs der Formwalzen dient der vordere Bereich 64 des Füllrohres 42 als Widerlager, so dass der Hüllkörper nicht unbegrenzt dem Druck der Formwalzen ausweichen kann. Wenn die Formwalzen mit sich ergänzenden Hohlkehlen ausgebildet sind, kann bei entsprechender Aufheizung ein Backen der Aussenseite des Hüllkörpers erfolgen, so dass eine angebackene, knusprige Oberfläche des Hüllmaterials erreicht wird.

Wenn während des Betriebs des Kochextruders eine Verstopfung des Füllrohres eintritt, ist es nicht erforderlich, den Extruder abzuschalten und damit die Produktion zu stoppen, da das Füllrohr leicht nach hinten aus dem Düsenkopf herausgezogen und durch ein neues, sauberes Füllrohr ersetzt werden kann, durch welches sofort weiter Füllmasse in den Hüllkörper eingebracht werden kann. Um diese Handhabung zu erleichtern, ist die Düsenplatte 10 derart ausgebildet, dass hinter dem Düsenkopf ausreichend freier Raum zum Herausziehen des Füllrohres bleibt. Wie aus Fig. 2 zu ersehen ist, wird das von einer nicht dargestellten Extruderschnecke zugeführte Material für den Hüllkörper in Richtung des Pfeiles 70 in die Düsenplatte 10 durch die Durchgangsbohrung 72 eingespeist. In der Düsenplatte 10 erfolgt eine Umlenkung des Materials, so dass dieses in den Kanal 34 zwischen den Platten 16 und 20 fliessen kann. Am Ende des Kanals 34 ist der Hohldorn bzw. das Füllrohr 22 angeordnet, um welches das Material herumgeführt wird. Dazu ist in der mittleren Platte 18 eine konusförmige Erweiterung 74 des Kanals 34 vorgesehen. Von dem Kanal 34 bzw. der Erweiterung 74 gelangt das Material an die Stauplatte 30, die über einen Stift 76 drehfest gehalten wird. Die Stauplatte 30 weist eine Lochung auf, die abgestimmt auf das zu extrudierende Material nicht gleichmässig über die gesamte Fläche verteilt sein muss. Wie aus den Fig. 4 und 5 zu ersehen ist, ist in einem Bereich 78, an welchen das Hüllmaterial zuerst gelangt, keine Lochung ausgebildet, so dass sich das Material gleichmässiger um den Hohldorn 22 herum verteilt. In der Stauplatte 30 ist eine halbkreisförmige Nut 80 für den Befestigungsstift 76 vorgesehen. Hinter der Stauplatte 30 gelangt das Material in den Ringraum 36 zwischen der Aussenseite des Hohldornes oder Führungsrohres 22 und der Innenseite des Düseneinsatzes 38, um anschliessend aus dem Düsenkopf herauszutreten. Der Düseneinsatz 38 ist in Draufsicht und im Querschnitt in Fig. 6 und 7 gezeigt. Bei der gezeigten Ausführungsform ist die Düsenöffnung quadratisch ausgebildet. Die die Düsenplatten 10 bildenden Platten 16, 18 und 20 sind über Schrauben 14 zuammengespannt, wobei um die Eintrittsöffnung für das Hüllmaterial und um den Kanal 34 sowie um den Düsenkopf herum eine entsprechende Anzahl von Befestigungsschrauben 14 vorgesehen ist, um den grossen Druck innerhalb der Düsenplatte 10 aufzunehmen. Zur Einstellung des Druckes in dem Materialstrom für den Hüllkörper ist der Eintrittsöffnung 72 gegenüberliegend eine Einstellschraube 82 angeordnet, welche in Form einer Düsennadel eine konische Spitze 84 aufweist. Je nach Einschraubtiefe der Spitze 84 kann eine Erhöhung oder Verminderung des Druckes in dem Materialstrom für den Hüllkörper erfolgen.

Wie aus Fig. 3 zu ersehen ist, sind um den Düsenkopf herum Heizelemente 90, 92, 94 und 96 angeordnet. Diese Heizelemente, beispielsweise in Form von Heizpatronen, sind auf der Extruderabgewandten Seite des Düsenkopfes 12 vorgesehen. Damit ist es möglich, das durch den Kanal 34 zugeführte und um den Hohldorn 22 geleitete Material für den Hüllkörper überall auf der gleichen Temperatur und damit der gleichen Konsistenz zu halten, so dass irgendwelche Fliessnähte oder Fehlstellen in dem extrudierten Hüllkörper vermieden werden. Die Heizelemente können auf eine konstante vorbestimmte Temperatur eingestellt werden.

Das Füllrohr kann als Mehrfachfüllrohr ausgebildet sein, d.h., innerhalb beispielsweise eines zylindrischen Aussenrohres können zwei oder mehr Füllrohre nebeneinander verlegt sein, so dass verschiedene Füllmassen in den Hüllkörper eingefüllt werden können. Ferner ist es möglich, das Füllrohr an eine Druckgasquelle, insbesondere eine Luftdruckquelle anzuschliessen, um den extrudierten Hüllkörper aufzublasen, so dass dessen Wandfläche dünner ausgebildet werden kann, als es durch die Geometrie der Düse und die Bestandteile, die durch den Düsenspalt geführt werden müssen, möglich ist. An dem vorderen freien Ende des Füllrohres kann ein Leitdorn angeordnet werden, welcher beispielsweise mit Druckluft mitgeführtes Pulver oder einen flüssigen Stoff gegen die Innenwand eines aufgeblähten Hüllkörpers leitet. Dadurch ist es möglich, die Innenwand des Hüllkörpers auszuspritzen. Ferner ist es möglich, zwischen dem Hohldorn 22 und dem Düsenkörper 38 ein Verbindungselement anzuordnen, mit dessen Hilfe in dem extrudierten Hüllkörper eine Sollbruchstelle geschaffen wird. Vor dem Düsenkopf kann dann ein externes Füllrohr angeordnet werden, welches in das Innere des beispielsweise aufgeblähten Hüllkörpers reicht, so dass die Sollbruchstelle durch dieses Füllrohr geöffnet wird. Durch das externe Füllrohr kann gleichzeitig eine Füllung in den geöffneten Hohlkörper eingebracht werden.

**Patentansprüche**

1. Kochextruder mit einer Extruderschnecke zur Zuführung des Materials für einen Hüllkörper und mit einem Düsenkopf, wobei durch den Düsenkopf ein Füllrohr zur Zuführung des Materials eines Füllkörpers geführt ist und das Füllrohr von einem Ringraum umgeben ist, der ggf. an eine Unterdruckquelle anschliessbar ist, wobei das Material des Hüllkörpers unter einem Winkel zur Achse des Füllrohrs zugeführt wird, wobei das Füllrohr (42) innerhalb eines Hohldornes oder Führungsrohres (22) angeordnet ist und der Hohldorn oder das Führungsrohr (22) die Innenseite der Düse für das Material des Hüllkörpers bildet, dadurch gekennzeichnet, dass das Füllrohr (42) ohne Demontage des Düsenkopfes lösbar innerhalb des Ringraumes angeordnet und nach hinten aus dem Düsenkopf (12) herausziehbar ist, und dass eine einstellbare Klemme (62) oder ein einstellbarer Klemmring an dem Füllrohr (42) angeordnet ist.

2. Kochextruder nach Anspruch 1, dadurch gekennzeichnet, dass am Ausgangsende des Extruders eine rechtwinklig angeordnete Düsenplatte (10) mit Innenkanal (34) für das Material des Hüllkörpers angeordnet ist, und dass die Achse des Düsenkopfes (12) parallel versetzt zu der Achse der Extruderschnecke verläuft.

3. Kochextruder nach einem der Ansprüche 1 und 2, dadurch gekennzeichnet, dass vor dem Düsenkopf (12) Formwalzen (66, 68) angeordnet sind, und dass das Füllrohr (42) mit einem Bereich (64) zwischen die Formwalzen (66, 68) hindurchgeführt ist und ein Widerlager für die Formwalzen (66, 68) bildet.

4. Kochextruder nach Anspruch 3, dadurch gekennzeichnet, dass die Formwalzen (66, 68) mit einem Muster oder einem Zeichen oder einer Hohlkehle ausgebildet und bis auf Rotglut aufheizbar sind.

5. Kochextruder nach einem der Ansprüche 1 bis 4, dadurch gekennzeichnet, dass um den Düsenkopf (12) Heizelemente (90, 92, 94, 96) angeordnet sind, dass die Heizelemente (90–96) in Form von Heizpatronen ausgebildet sind, und dass die Heizelemente (90–96) an der Extruderabgewandten Seite des Düsenkopfes (12) angeordnet sind.

6. Kochextruder nach einem der Ansprüche 1 bis 5, dadurch gekennzeichnet, dass das Füllrohr (42) als Mehrfach-Füllrohr ausgebildet ist und/oder dass das Füllrohr (42) an eine Druckgasquelle anschliessbar ist und dass ggf. am vorderen Ende des Füllrohres (42) ein Leitdorn angeordnet ist.

7. Kochextruder nach einem der Ansprüche 1 bis 6, dadurch gekennzeichnet, dass im Düsenkopf (12) eine Stauplatte (30) um den Hohldorn oder das Führungsrohr (22) angeordnet ist, und dass die Stauplatte (30) mit einer Lochung (32) zur gleichmässigen Verteilung des Materialstromes vor dem Austritt aus dem Düsenkopf (12) versehen ist.

8. Kochextruder nach einem der Ansprüche 1 bis 7, dadurch gekennzeichnet, dass zur Einstellung des Druckes in dem Material für den Hüllkörper eine Einstellschraube (82) vor dem Extruderende angeordnet ist und dass die Einstellschraube (82) in Form einer Düsennadel mit konischer Spitze (84) ausgebildet ist.

9. Kochextruder nach einem der Ansprüche 1 bis 8, dadurch gekennzeichnet, dass zwischen der Ringdüse und dem Füllrohr ein Trennelement und vor dem Düsenkopf ein weiteres Füllrohr, welches mit seinem Ende in das Innere des Hüllkörpers ragt, angeordnet sind.

**Claims**

1. Cooking extruder with an extruder screw for feeding the material for an enveloping body and with a die head, a filling tube for feeding the material of a filling body being guided through the die head, and the filling tube being surrounded by an annular space which, if appropriate, can be connected to a vacuum source, the material of the enveloping body being fed at an angle to the axis of the filling tube, the filling tube (42) being arranged inside a hollow mandrel or guide tube (22), and the hollow mandrel or the guide tube (22) forming the inside of the die for the material of the enveloping body, characterized in that, without the die head being removed, the filling tube (42) is arranged releasably within the annular space and can be pulled out of the die head (12) rearwards, and in that an adjustable clamp (62) or an adjustable clamping ring is arranged on the filling tube (42).

2. Cooking extruder according to claim 1, characterized in that at the outlet end of the extruder is located a die plate (10) arranged at right angles and with an inner channel (34) for the material of the enveloping body, and in that the axis of the die head (12) extends parallel and offset relative to the axis of the extruder screw.

3. Cooking extruder according to one of claims 1 and 2, characterized in that shaping rollers (66, 68) are arranged in front of the die head (12), and in that the filling tube (42), over a region (64), is guided through between the shaping rollers (66, 68) and forms an abutment for the shaping rollers (66, 68).

4. Cooking extruder according to claim 3, characterized in that the shaping rollers (66, 68) are designed with a pattern or a mark or a groove and can be heated up to red heat.

5. Cooking extruder according to one of claims 1 to 4, characterized in that heating elements (90, 92, 94, 96) are arranged round the die head (12), in that the heating elements (90–96) are designed in the form of heating cartridges, and in that the heating elements (90–96) are arranged on the side of the die head (12) facing away from the extruder.

6. Cooking extruder according to one of claims 1 to 5, characterized in that the filling tube (42) is designed as a multiple filling tube, and/or in that the filling tube (42) can be connected to a compressed gas source and in that, if appropriate, a guide mandrel is arranged at the front end of the filling tube (42).

7. Cooking extruder according to one of claims 1 to 6, characterized in that a baffle plate (30) is arranged in the die head (12) round the hollow mandrel or the guide tube (22), and in that the baffle plate (30) is equipped with a perforation (32) for the uniform distribution of the stream of material before the outflow from the die head (12).

8. Cooking extruder according to one of claims 1 to 7, characterized in that, in order to adjust the pressure in the material for the enveloping body, an adjusting screw (82) is arranged in front of the extruder end, and in that the adjusting screw (82) is designed in the form of a die needle with a conical tip (84).

9. Cooking extruder according to one of claims 1 to 8, characterized in that a separating element is arranged between the annular die and the filling tube and a further filling tube projecting with its end into the interior of the enveloping body is arranged in front of the die head.


**Revendications**

1. Cuiseur extrudeur avec une vis d'extrudeuse ayant pour rôle d'amener la matière pour un corps de grainage et avec une tête d'injecteur, un tube de remplissage destiné à amener la matière pour un corps de remplissage passant à travers la tête d'injecteur, et ce tube de remplissage étant entouré par un espace annulaire qui peut être éventuellement mis en liaison avec une source de dépression, la matière du corps de gainage étant amenée obliquement par rapport à l'axe du tube de remplissage, ce même tube de remplissage (42) étant disposé à l'intérieur d'un mandrin creux ou tube de guidage (22), et le mandrin creux ou le tube de guidage (22) formant le côté intérieur de la buse pour la matière du corps de gainage, caractérisé en ce que le tube de remplissage (42) est disposé à l'intérieur de l'espace annulaire de façon à pouvoir être détaché sans démontage de la tête d'injecteur, et peut être extrait vers l'arrière hors de la tête d'injecteur (12), et qu'une pince de serrage (62) réglable ou un anneau de serrage réglable est disposé sur le tube de remplissage (42).

2. Cuiseur extrudeur selon la revendication 1, caractérisé en ce qu'à l'extrémité sortie de l'extrudeuse est disposée perpendiculairement une plaque de buse (10) avec un canal intérieur (34) pour la matière du corps de gainage, et que l'axe de la tête d'injecteur (12) est décalé parallèlement à l'axe de la vis d'extrudeuse.

3. Cuiseur extrudeur selon la revendication 1 ou 2, caractérisé en ce qu'en avant de la tête d'injecteur (12) sont disposés des cylindres profilés (66, 68) et qu'une partie (64) du tube de remplissage (42) passe entre les cylindres profilés (66, 68) et forme contre-appui pour les cylindres profilés (66, 68).

4. Cuiseur extrudeur selon la revendication 3, caractérisé en ce que les cylindres profilés (66, 68) sont pourvus d'un dessin ou d'un signe ou d'une moulure creuse et peuvent être chauffés jusqu'au rouge sombre.

5. Cuiseur extrudeur selon une quelconque des revendications 1 à 4, caractérisé en ce que des éléments chauffants (90, 92, 94, 96) sont disposés autour de la tête d'injecteur (12), que ces éléments chauffants (90 à 96) sont des cartouches chauffantes, et que les éléments chauffants (90 à 96) sont disposés du côté de la tête d'injecteur (12) situé à l'opposé de l'extrudeuse.

6. Cuiseur extrudeur selon une quelconque des revendications 1 à 5, caractérisé en ce que le tube de remplissage (42) a une configuration de tube de remplissage multiple et/ou que le tube de remplissage (42) peut être raccordé à une source de gaz comprimé, et qu'une patronne est éventuellement disposée à l'extrémité avant du tube de remplissage (42).

7. Cuiseur extrudeur selon une quelconque des revendications 1 à 6, caractérisé en ce qu'un diaphragme (30) est disposé dans la tête d'injecteur (12) autour du mandrin creux ou du tube de guidage (22) et que le diaphragme (30) présente des perforations (32) pour répartir de façon uniforme le flux de matière avant qu'il ne sorte de la tête d'injecteur (12).

8. Cuiseur extrudeur selon une quelconque des revendications 1 à 7, caractérisé en ce que, pour régler la pression dans la matière pour le corps de gainage, il est prévu une vis de réglage (82) en avant de l'extrémité de l'extrudeuse et que la vis de réglage (82) a la configuration d'un pointeau à pointe conique (84).

9. Cuiseur extrudeur selon une quelconque des revendications 1 à 8, caractérisé en ce que sont disposés entre la buse annulaire et le tube de remplissage un élément de séparation, et, en avant de la tête d'injecteur, un deuxième tube de remplissage qui s'engage par son extrémité à l'intérieur du corps de gainage.

FIG.1

FIG. 2

FIG. 3

FIG. 4

FIG. 5

FIG. 6

FIG. 7